# EUROPEAN PATENT SPECIFICATION

(11) **EP 4 030 500 B1**
(45) Date of publication and mention of the grant of the patent: **25.11.2026**
(21) Application number: 20862068.2
(22) Date of filing: 04.09.2020
(51) Int. Cl.: H01M 4/13, H01M 10/0583, H01M 10/04, H01M 10/052, H01M 10/0587, H01M 50/586, H01M 50/46, H01M 50/595

(54) **BATTERY, BATTERY MODULE, BATTERY PACK, AND AUTOMOBILE**
BATTERIE, BATTERIEMODUL, BATTERIEPACK UND KRAFTFAHRZEUG
BATTERIE, MODULE DE BATTERIE, BLOC-BATTERIE ET AUTOMOBILE

(30) Priority: 12.09.2019 CN 201910862214
(43) Date of publication of application: 20.07.2022
(73) Proprietor: BYD Company Limited, Shenzhen, Guangdong 518118 (CN)
(72) Inventor: WANG, Jianjun, Shenzhen, Guangdong 518118 (CN); HUI, Bingfei, Shenzhen, Guangdong 518118 (CN); JIANG, Zhixin, Shenzhen, Guangdong 518118 (CN); YIN, Xiaoqiang, Shenzhen, Guangdong 518118 (CN)
(74) Representative: Mathys & Squire
(86) International application number: PCT/CN2020/113470
(87) International publication number: WO 2021/047450

(56) References cited:
- EP-B1- 2 258 019
- WO-A1-2016/135038
- CN-A- 105 244 456
- CN-A- 105 914 339
- CN-A- 106 784 993
- CN-A- 109 301 152
- CN-U- 202 172 092
- CN-U- 202 737 030
- CN-U- 202 758 972
- CN-U- 207 868 269
- CN-Y- 2 824 302
- CN-Y- 2 857 237
- CN-Y- 2 914 338
- JP-A- 2009 205 868
- US-A1- 2007 264 552
- US-B2- 9 077 043

## Description

### FIELD

The present disclosure relates to the field of batteries, and in particular, to a cell, a battery module, a battery pack, and a vehicle.

### BACKGROUND

To reduce the internal resistance of the battery, improve the battery capacity, and reduce the difficulty of automated battery production, currently, in the manufacturing process of cells available on the market, the method of forming electrode tabs has been changed from the conventional method of adhering separate electrode tabs to an electrode plate to the method of forming electrode tabs by die-cutting an electrode plate, i.e., the method of die-cutting an electrode plate and directly using the remaining parts to form an electrode tabs.

However, the die-cutting for forming electrode tabs leads to the formation of burrs at the edge of the electrode tab. In the process of preparing a cell core or in the process of using the battery, the electrode tabs need to be bent by a certain angle in order to be electrically connected to an electrode terminal. During the bending process, burrs on the electrode plate (especially the positive electrode plate) may pierce the separator and cause positive and negative electrodes to be in contact with each other, resulting in a short circuit, which seriously affects the safety of the battery. US 9 077 043 B2 discloses a battery including an electrode group that includes a positive electrode and a negative electrode, an electrolyte, and a battery cell container that contains the electrode group and the electrolyte. The electrode group is manufactured by winding a first separator, a positive electrode, a second separator and a negative electrode around a winding core in this order. Positive leads at the positive electrode sheet are all welded to the upper cylindrical portion of a positive electrode current collecting member. The positive leads, arranged to overlap one another, are bonded to the upper cylindrical portion of the positive electrode current collecting member. EP 2 258 019 B1 discloses a battery wherein an insulator tape is attached to the boundary of a cathode active-material coating layer at a position where an anode active-material coating layer faces a cathode uncoated part where no cathode active-material coating layer is present. Further, separators are interposed between the anode and cathode active-material coating layers.

In the prior art, in order to solve the above problems and prevent burrs from piercing the separator to cause a short circuit between the positive and negative electrodes, a ceramic coating of a certain thickness, e.g., boehmite or aluminum oxide, is generally coated on each side of the positive electrode plate. The ceramic coating is provided between the positive electrode plate and the negative electrode plate and can prevent burrs from piercing the separator to a certain extent, thereby reducing the probability of occurrence of short circuit.

In the process of preparing a cell, first, boehmite or aluminum oxide needs to be coated on a positive electrode plate, and then the positive electrode plate is die-cut to form electrode tabs. On the one hand, for the coating of boehmite or aluminum oxide on the positive electrode plate, the coating thickness is difficult to control, and the stability is poor, leading to a higher process difficulty. On the other hand, because coating is performed before die-cutting, wavy edges cannot be formed during slitting of the positive electrode plate coated with boehmite or aluminum oxide, and the die-cutting parameter window is small, which has an adverse effect on die-cutting. Moreover, defects such as slag and burrs are easily formed on the edge during die-cutting. The slag and burrs may still pierce the separator and cause positive and negative electrodes to be in contact with each other, resulting in a short circuit in the cell, and affecting the safety of the battery.

Although the coating of boehmite or aluminum oxide can reduce the risk of burrs piercing the separator to a certain extent, its ability to prevent piecing and short circuiting is limited, failing to meet the ever-increasing requirements on the safety performance of the battery.

### SUMMARY

An objective of the present invention is to provide a cell, a battery module, a battery pack, and a vehicle that can effectively prevent burrs from piercing the separator and ensure high safety of the battery.

To solve the above technical problems, the following technical solutions are employed in the present disclosure.

The present invention is defined in claim 1. The dependent claims provide additional advantageous embodiments.

### BRIEF DESCRIPTION OF THE DRAWINGS

FIG. 1 is a schematic structural diagram of a separator according to an embodiment of the present disclosure.
FIG. 2 is a schematic structural diagram of an undie-cut positive electrode plate according to an embodiment of the present disclosure.
FIG. 3 is a schematic structural diagram of a die-cut positive electrode plate according to an embodiment of the present disclosure.
FIG. 4 is an overall schematic diagram of a die-cut positive electrode plate and an insulating adhesive tape according to an embodiment of the present disclosure.
FIG. 5 is a schematic diagram showing the relationship between positions of a separator, a positive electrode plate, and an insulating adhesive tape according to an embodiment of the present disclosure.
FIG. 6 is a schematic structural diagram of a pole core formed by winding of electrode plates according to an embodiment of the present disclosure.
FIG. 7 is a schematic structural diagram of a pole core formed by stacking of electrode plates according to an embodiment of the present disclosure.
FIG. 8 is a schematic structural diagram of a battery according to an embodiment of the present disclosure.
FIG. 9 is a schematic structural diagram of a battery module according to an embodiment of the present disclosure.
FIG. 10 is a schematic structural diagram of a battery pack according to an embodiment of the present disclosure.
FIG. 11 is a schematic structural diagram of a vehicle according to an embodiment of the present disclosure.

List of reference numerals:
separator 10; first separator side 101; second separator side 102; first separator end 103; second separator end 104; insulating adhesive tape 20; first adhesive-tape side 201; second adhesive-tape side 202; first adhesive-tape end 203; second adhesive-tape end 204; positive electrode plate 30; first positive-electrode-plate side 301; second positive-electrode-plate side 302; ceramic coating 303; first coating side 3031; second coating side 3032; positive electrode dressing layer 304; first positive-electrode-plate end 305; second positive-electrode-plate end 306; positive electrode tab 40; negative electrode plate 50; negative electrode tab 60; cell 70; end plate 71; top cover 72; tray 80; lifting lug 81; battery module 82; chassis 90; battery pack 91.

### DETAILED DESCRIPTION

Embodiments of the present disclosure will be described in detail below with reference to the accompanying drawings in which the same or like reference characters refer to the same or like elements or elements having the same or like functions throughout. The embodiments described below with reference to the accompanying drawings are exemplary, and are intended to explain the present disclosure.

In the description of the present disclosure, it should be understood that the orientation or positional relationships indicated by the terms "length", "width", "upper", "lower", "front", "rear", "left", "right", "vertical", "horizontal", "top", "bottom", "inner", "outer", etc. are based on the orientation or positional relationships shown in the drawings, and are only for the convenience of describing the present disclosure and simplifying the description, rather than indicating or implying that the apparatus or element described must have a specific orientation or be constructed and operated in a specific orientation.

Moreover, the terms "first" and "second" are used herein for purposes of description, and are not intended to indicate or imply relative importance or implicitly point out the number of the indicated technical feature. Therefore, the features defined by "first", and "second" may explicitly or implicitly include one or more features. In the description of the present disclosure, "multiple" and "a plurality of" mean two or more, unless otherwise particularly defined.

In the present disclosure, unless otherwise clearly specified and defined, the terms "mount", "connect", "couple", "fix" and variants thereof should be interpreted in a broad sense, for example, may be a fixed connection, a detachable connection, or an integral connection; may be a mechanical connection or an electrical connection; or may be a direct connection, an indirectly connection via an intermediate medium, communication between the interiors of two components, or an interactive relationship between two components. For those of ordinary skill in the art, the specific meanings of the above terms in the present disclosure can be understood according to specific circumstances.

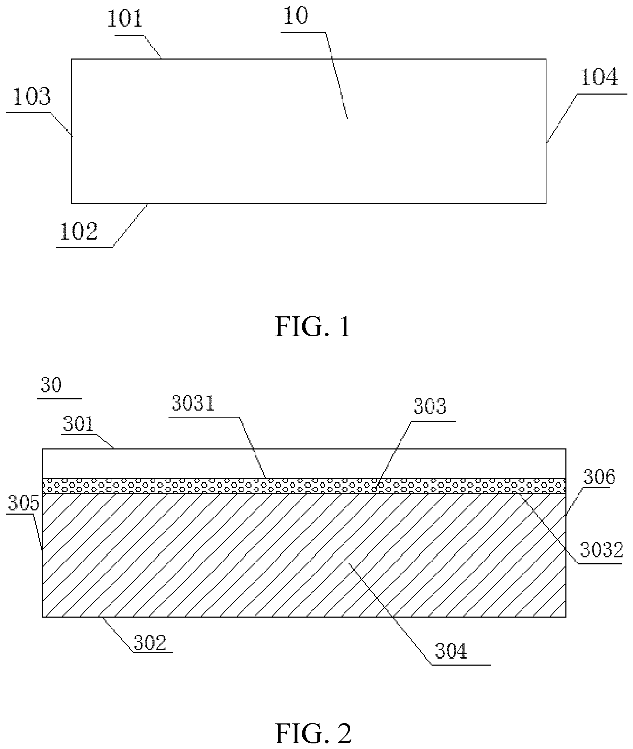

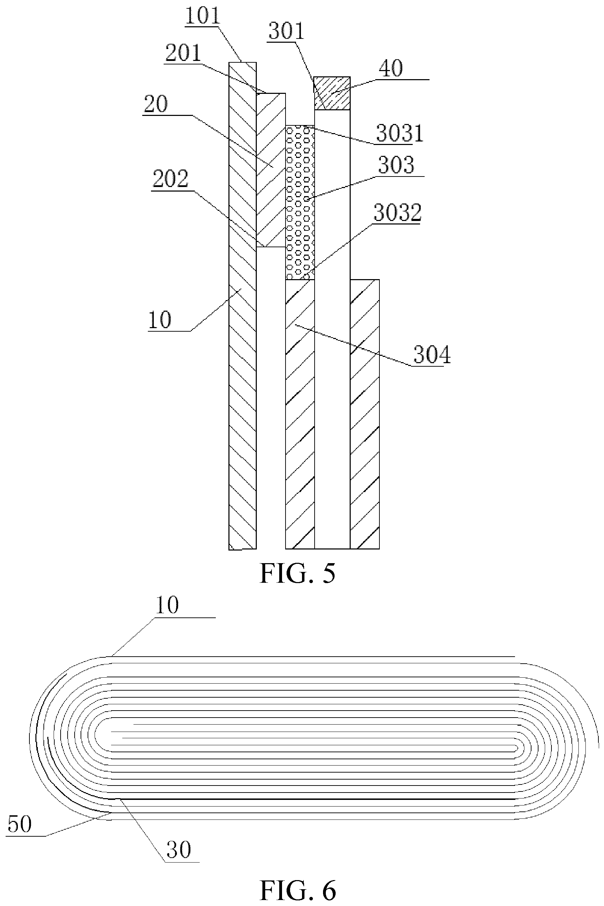

The present disclosure provides a cell. As shown in FIG. 6 to FIG. 7, the cell includes a positive electrode plate 30, a negative electrode plate 50, and a separator 10. The separator 10 is at least partially disposed between the positive electrode plate 30 and the negative electrode plate 50. As shown in FIG. 1, FIG. 2, and FIG. 3, the positive electrode plate 30 includes a first positive-electrode-plate side 301 and a second positive-electrode-plate side 302 arranged opposite to each other in a first direction. The separator 10 includes a first separator side 101 and a second separator side 102 arranged opposite to each other in the first direction. The first separator side 101 is arranged on a same side as the first positive-electrode-plate side 301. A positive electrode tab 40 is arranged on the first positive-electrode-plate side 301, and a negative electrode tab 60 is arranged on the negative electrode plate 50.

In some embodiments, as shown in FIG. 5, the positive electrode plate 30 includes a positive electrode current collector and a positive electrode dressing layer 304 arranged on the positive electrode current collector, and the negative electrode plate 50 includes a negative electrode current collector and a negative electrode dressing layer arranged on the negative electrode current collector. The positive electrode plate 30 and the negative electrode plate 50 are separated by the separator 10.

The positive electrode tab 40 is arranged on the first positive-electrode-plate side 301. A position of the positive electrode tab 40 corresponds to that of the first separator side 101. The first separator side 101 is arranged on a same side as the first positive-electrode-plate side 301. The negative electrode tab 60 is arranged on the negative electrode plate 50, a position of the negative electrode tab 60 corresponds to that of the positive electrode plate 30, and the negative electrode plate 50 also includes a first negative-electrode-plate side and a second negative-electrode-plate side arranged opposite to each other in the first direction. The negative electrode tab 60 may be disposed on the first negative-electrode-plate side, or may be disposed on the second negative-electrode-plate side. That is, the positive electrode tab 40 and the negative electrode tab 60 may be provided at a same end or different ends on the battery. Correspondingly, a positive terminal and a negative terminal for outputting a current may also be provided at a same end or different ends.

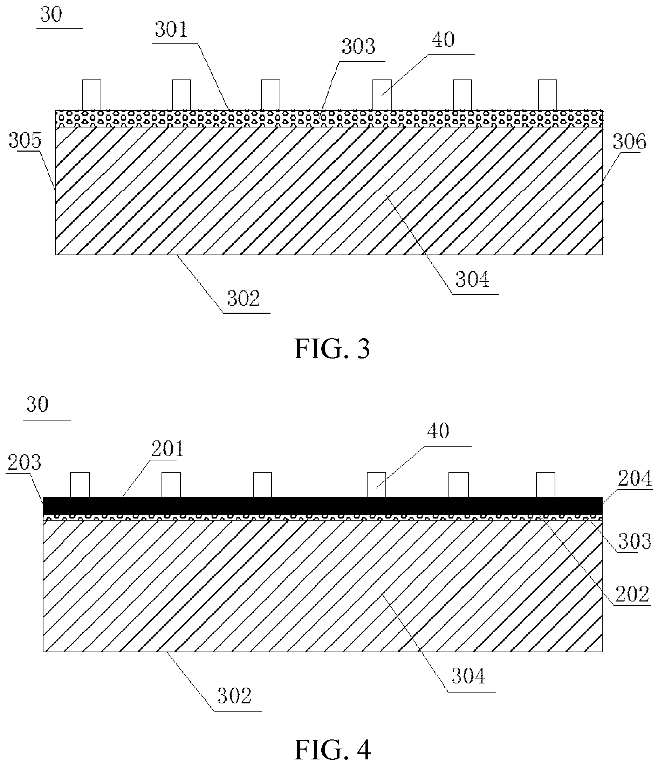

In the cell provided by the present disclosure, as shown in FIG. 4 and FIG. 5, an insulating adhesive tape 20 is attached to the positive electrode plate 30, and the insulating adhesive tape 20 includes a first adhesive-tape side 201 and a second adhesive-tape side 202 arranged opposite to each other in the first direction. The first positive-electrode-plate side 301 is provided between the first adhesive-tape side 201 and the second adhesive-tape side 202 in the first direction, and the second adhesive-tape side 202 is provided between the first positive-electrode-plate side 301 and the second positive-electrode-plate side 302 in the first direction. The positive electrode plate 30 includes a first positive-electrode-plate end 305 and a second positive-electrode-plate end 306 arranged opposite to each other in a second direction, the insulating adhesive tape 20 includes a first adhesive-tape end 203 and a second adhesive-tape end 204 arranged opposite to each other in the second direction, and the separator 10 includes a first separator end 103 and a second separator end 104 disposed opposite to each other in the second direction. The insulating adhesive tape 20 extends from the first positive-electrode-plate end 305 to the second positive-electrode-plate end 306 in the second direction.

In the disclosure, the positive electrode tab 40 extends out from the first separator side 101, and an electrode terminal of a cell also extends out in the first direction and is arranged at a cover plate in the first direction.

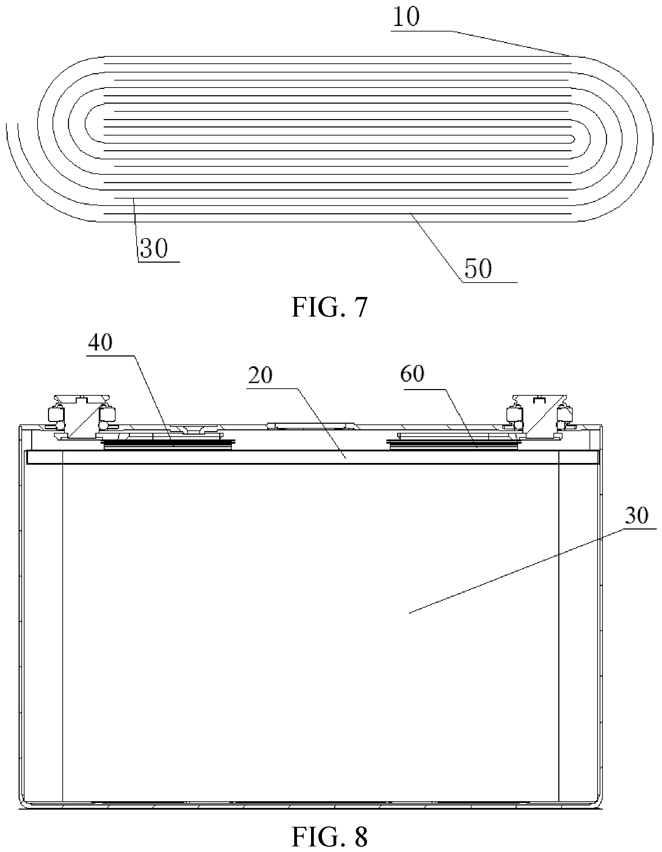

In some embodiments of the present disclosure, as shown in FIG. 5 and FIG. 8, the positive electrode tab 40 and the negative electrode tab 60 may extend out toward a same side, or may extend out toward two sides respectively, i.e., the positive electrode tab 40 and the negative electrode tab 60 may both be arranged on the first separator side 101, or the positive electrode tab 40 is arranged on the first separator side 101 and the negative electrode tab 60 is arranged on the second separator side 102. The positive electrode tab 40, the first separator side 101, and the first adhesive-tape side 201 are provided on a same side. As such, the insulating adhesive tape 20 can effectively prevent burrs formed at the die-cut edge of the positive electrode tab 40 from piercing the battery separator 10 to cause a short circuit between the positive and negative electrodes and affect the safety of the cell. Correspondingly, when positive and negative electrode terminals extend out toward the same side, the electrode terminals are provided at a cover plate at one end corresponding to the first separator side 101. When the positive and negative electrode terminals extend out toward two sides respectively, the end corresponding to the first separator side 101 and the end corresponding to the second separator side 102 are each provided with a cover plate, the positive electrode terminal extends out from the cover plate corresponding to the first separator side 101, and the negative electrode terminal extends out from the cover plate corresponding to the second separator side 102.

The insulating adhesive tape 20 includes a first adhesive-tape side 201 and a second adhesive-tape side 202, and also includes a first adhesive-tape end 203 and a second adhesive-tape end 204. The first adhesive-tape side 201 and the second adhesive-tape side 202 are provided opposite to each other in the first direction, and the first adhesive-tape end 203 and the second adhesive-tape end 204 are provided opposite to each other in the second direction. As shown in FIG. 1 and FIG. 4, the first direction is an up-down direction in the figure, and the second direction is a left-right direction in the figure. The insulating adhesive tape 20 is attached to the positive electrode plate 30 in the second direction, and the first adhesive-tape side 201 is arranged at a position corresponding to the first positive-electrode-plate side 301, i.e., the first adhesive-tape side 201 and the first positive-electrode-plate side 301 are disposed on a same side.

In some embodiments, the insulating adhesive tape 20 is a rectangular sheet, and the first adhesive-tape side 201, the second adhesive-tape side 202, the first adhesive-tape end 203, and the second adhesive-tape end 204 are four sides of the rectangular sheet. As shown in FIG. 4. the first adhesive-tape side 201 is consistent with the first positive-electrode-plate side 301 and extends in the second direction. The second adhesive-tape side 202 is consistent with the second positive-electrode-plate side 302 and also extends in the second direction. The first adhesive-tape end 203 is consistent with the first positive-electrode-plate end 305 and extends in the first direction. The second adhesive-tape end 204 is consistent with the second positive-electrode-plate end 306 and extends in the first direction.

In the present disclosure, as shown in FIG. 4, the insulating adhesive tape 20 extends from the first positive-electrode-plate end 305 to the second positive-electrode-plate end 306 in the second direction (consistent with the positive electrode plate 30, where the second direction may be a length direction of the insulating adhesive tape 20). During the manufacturing process, the insulating adhesive tape 20 may be attached to the first positive-electrode-plate side 301 and extend from the first positive-electrode-plate end 305 to the second positive-electrode-plate end 306.

On the one hand, in the solution of forming an electrode tab by die-cutting, it is necessary to cut off all the excess foil along the length direction of the positive electrode plate 30 (the second direction). As such, after die-cutting, burrs not only may be formed at the edge of the positive electrode tab 40, but also may be formed on the entire first positive-electrode-plate side 301 in the second direction. The conventional solution of partially pasting an adhesive tape on the positive electrode tab 40 cannot prevent burrs at other positions on the first positive-electrode-plate side 301 from piercing the separator 10, and there is also a risk of short circuit and potential safety hazards. In the present disclosure, the insulating adhesive tape 20 extends from the first positive-electrode-plate end 305 to the second positive-electrode-plate end 306 in the second direction. In addition, the first positive-electrode-plate side 301 is arranged between the first adhesive-tape side 201 and the second adhesive-tape side 202 in the first direction, and the second adhesive-tape side 202 is arranged between the first positive-electrode-plate side 301 and the second positive-electrode-plate side 302 in the first direction, i.e., the first adhesive-tape side 201 is disposed protruding from the first positive-electrode-plate side 301 in the first direction, so that the insulating adhesive tape 20 can completely isolate the first positive-electrode-plate side 301. When the insulating adhesive tape 20 is combined with the positive electrode plate 30, the insulating adhesive tape 20 can completely cover the first positive-electrode-plate side 301 and the die-cut edge of the positive electrode tab 40. As such, burrs at all positions on the first positive-electrode-plate side 301 can be prevented from piercing the separator 10, thereby reducing or even eliminating the risk of short circuit, and improving the safety.

On the other hand, there is no need to align the position of the insulating adhesive tape 20 with the positions of the positive electrode tab 40 one by one, which reduces the difficulty of positioning in the production process, reduces the number of process steps, and also can avoid inaccurate positioning, reduce the defect rate, and reduce the risk of failure in providing the protection effect in the finished product due to inaccurate positioning.

In a word, in the battery provided by the present disclosure, the insulating adhesive tape 20 attached to the positive electrode plate 30 can effectively prevent burrs formed by the die cutting of the electrode plate from piercing the separator 10, and reduce the risk of short circuit caused by the burrs piercing the separator 10 inside the battery core. Furthermore, the insulating adhesive tape 20 is attached to the positive electrode plate 30, and the insulating adhesive tape 20 extends from the first positive-electrode-plate end 305 to the second positive-electrode-plate end 306 in the second direction. During the preparation process, there is no need to position and control the position of the positive electrode plate 30 in the second direction, which reduces the preparation difficulty. Moreover, the combination of the positive electrode plate 30 and the insulating adhesive tape 20 may be formed in the process of forming the battery core by stacking or winding. As such, the configuration of the insulating adhesive tape 20 is well combined with the preparation process of the battery core, which reduces the number of process steps. Also, the die-cutting of the electrode plates may be separated from the configuration of the insulating adhesive tape 20, thereby ensuring the safety without affecting the die-cutting of the electrode plates.

In the prior art, in addition to the solution of partially pasting an adhesive tape on the electrode tab, another solution is to coat each of two sides of the positive electrode plate 30 with a ceramic coating 303 of a certain thickness to achieve the effect of preventing burrs from piecing the separator. However, in the manufacturing process, first, a ceramic coating 303 needs to be coated on each of the two sides of the positive electrode plate 30. Next, the positive electrode plate 30 coated with the ceramic coatings 303 needs to be die-cut to obtain a positive electrode plate 30 having the positive electrode tab 40 formed by the die-cutting. Afterward, the positive electrode plate 30 is combined with the separator 10 and the negative electrode plate, and then wound or stacked to form a cell. In this process, on the one hand, the process requirements are high, and on the other hand, in the die-cutting process, the die-cutting parameter window is small, which is not conducive to die-cutting. Besides, some slag or burrs may still be formed at the edge after die-cutting, and cannot be covered, which still leads to the risk of short circuit and affects the safety. In addition, in the process of coating the ceramic coating 303, the thickness of the ceramic coating 303 needs to be strictly controlled, and the control needs to be monitored in real time and completed during the coating process. Moreover, the positive electrode plate 30 coating with the ceramic coatings 303 leads to an increase in the die-cutting difficulty and a change in the requirements for the die-cutting process, posing high requirements on the overall process and control. In the present disclosure, the preparation of the insulating adhesive tape is simpler than the coating of the ceramic coating 303, and allows easier thickness control. In addition, the configuration of the insulating adhesive tape may be performed after the die-cutting of the positive electrode plate 30 is completed, which, on the one hand, does not affect the die-cutting process of the positive electrode plate 30, and on the other hand, can effectively cover the positions where burrs are formed by the die-cutting, thereby reducing the risk of short circuit and improving the safety.

In an alternative of the present invention, as shown in FIG. 1, the first adhesive-tape side 201 is flush with the first separator side 101, and this structure shows an ideal optimal position for the insulating adhesive tape 20 to cooperate with the separator 10. As such, every part of the separator 10 can be completely protected, to prevent the entire separator from being pierced.

In practice, and according to another alternative of the present invention, considering the deviation correction of the winding machine and the fluctuation in the width slitting process of the insulating adhesive tape 20 and the separator 10 in the processing and preparation process, the first adhesive-tape side 201 is spaced apart from the first separator side 101 by a distance, where the distance is less than or equal to 1 mm.

The width of the positive electrode plate 30 directly affects the width of the positive electrode dressing layer 304, which in turn affects the capacity of the battery. To be specific, the larger the width and the size of the positive electrode plate 30, the higher the overall capacity of the battery. In contrast, in the case of a certain volume, how to effectively use the space in the limited volume to obtain a larger capacity is a problem that needs to be overcome in the current battery industry. Therefore, theoretically, the width of the positive electrode dressing layer 304 on the positive electrode plate 30 is preferably as large as possible. In the present disclosure, the insulating adhesive tape 20 is attached to the positive electrode plate 30. When used in a battery, the insulating adhesive tape 20 is arranged between the separator 10 and the positive electrode plate 30 to prevent burrs formed by die-cutting of the positive electrode plate 30 from piercing the separator 10 to cause the positive electrode plate 30 and the negative electrode plate to be in contact with each other to short circuit. An excessively large width of the insulating adhesive tape 20 affects the width of the positive electrode dressing layer 304 and therefore affects the capacity of the battery. In addition, the insulating adhesive tape 20 should not cover the positive electrode dressing layer 304, or otherwise the battery performance will be affected and the lithium deposition of the positive electrode dressing layer 304 will be inhibited. To sum up, in the present disclosure, the width of the insulating adhesive tape 20 cannot be too large, or otherwise it will cover the positive electrode dressing layer 304 or affect the capacity of the battery; and also cannot be too small, or otherwise the technical problem to be solved by the present disclosure cannot be well solved, and the effect of preventing piecing cannot be achieved. Therefore, in some embodiments of the present disclosure, a width of the insulating adhesive tape 20 in the first direction is 4 mm to 6 mm.

In order to ensure the bonding reliability between the insulating adhesive tape 20 and the positive electrode plate 30, especially in the battery preparation process where a particularly high bonding reliability is required, in the present disclosure, a peel strength between the insulating adhesive tape 20 and the positive electrode plate 30 is selected to be greater than or equal to 0.11 gf/cm. The adhesiveness between the insulating adhesive tape 20 and the positive electrode plate 30 is improved to provide a good adhesion between them, so that warpage and deformation will not occur during the preparation process of the pole core, and they will not fall off in the battery.

In some embodiments, in order to reduce the overall thickness of the battery and improve the energy density, the insulating adhesive tape 20 is selected to be arranged on one surface of the positive electrode plate 30 in a thickness direction of the positive electrode plate 30, which may be any surface of the positive electrode plate 30 facing the separator 10.

In some other embodiments, in order to improve the overall strength, an insulating adhesive tape 20 is disposed on each of two surfaces of the positive electrode plate 30 in the thickness direction, thereby further improving the safety.

In the present disclosure, as shown in FIG. 1, the first separator side 101 and the second separator side 102 both extend in the second direction, and the first separator end 103 and the second separator end 104 both extend in the first direction; and the first separator side 101, the second separator side 102, the first separator end 103, and the second separator end 104 constitute four sides of the separator 10.

The first adhesive-tape side 201 and the second adhesive-tape side 202 both extend in the second direction, and the first adhesive-tape end 203 and the second adhesive-tape end 204 both extend in the first direction.

The first positive-electrode-plate side 301 and the second positive-electrode-plate side 302 both extend in the second direction, and the first positive-electrode-plate end 305 and the second positive-electrode-plate end 306 both extend in the first direction.

The second adhesive-tape side 202 is disposed close to the second separator side 102. Herein, "close to" means that the second adhesive-tape side 202 is closer to the second separator side 102 than the first adhesive-tape side 201 is.

In addition, the first adhesive-tape end 203 is disposed at a position corresponding to the first positive-electrode-plate end 305, and the second adhesive-tape end 204 is disposed at a position corresponding to the second positive-electrode-plate end 306.

In the present disclosure, the separator 10 is a separator commonly used in the prior art, and is mainly used for separating the positive electrode plate 30 and the negative electrode plate of the battery to prevent a short circuit caused by the contact of the two electrodes, and to allow ions in the electrolyte to pass through. For example, commonly used separator smainly include a polyethylene film (PE film), a polypropylene film (PP film), and a multi-layer separator 10 composed of a PE film and a PP film. In addition, in order to improve the performance of the separator 10 itself, the separator 10 in the prior art further includes a separator prepared by adopting a phase inversion method with polyvinylidene fluoride (PVDF) as a bulk polymer.

In the present disclosure, the insulating adhesive tape 20 is attached to the positive electrode plate 30, and is mainly used for isolating the positive electrode plate 30 from the negative electrode plate, especially isolating the die-cut part of the positive electrode plate 30 from the negative electrode plate. The insulating adhesive tape 20 is sandwiched between the die-cut part of the positive electrode plate 30 and the negative electrode plate to provide insulation and prevent burrs formed by die-cutting from piercing the separator 10, so as to provide a protection effect.

In the present disclosure, directions including a second direction and a first direction are defined respectively. For a continuous sheet-like separator 10, the second direction is a length direction of the separator 10, and the first direction is a width direction of the separator 10. As shown in FIG. 1, the second direction is a left-right direction, and the first direction is an up-down direction.

According to the invention, a direction in which an electrode tab (positive electrode tab 40 or negative electrode tab 60) extends out from an electrode plate (positive electrode plate 30 or negative electrode plate) is the first direction. As shown in FIG. 3, the up-down direction is the direction in which the positive electrode tab 40 extends out, i.e., the first direction, which is also a width direction of the positive electrode plate 30; and the direction perpendicular to the up-down direction is the second direction (which is a direction perpendicular to the first direction on the plane where a large surface of the positive electrode plate 30 lies. As shown in FIG. 4, the direction in which the positive electrode tab 40 extends out, i.e., the up-down direction, is the first direction, and the left-right direction perpendicular to the up-down direction is the second direction, i.e., the length direction of the positive electrode plate 30).

When the core of the cell is a wound cell core, generally the separator 10 is a continuous sheet. In this case, the second direction is a winding direction of the separator 10, where the left-right direction of a sheet-like separator 10 is the second direction, i.e., the winding direction of the battery separator 10; and the first direction is the width direction of the separator 10.

From the perspective of view of a cell, a cell length direction, a cell width direction, and a cell thickness direction of the cell are defined. Generally, a direction in which an electrode terminal extends out is regarded as the cell length direction, a direction perpendicular to the cell length direction on a large surface of the cell is regarded as the cell width direction, and a third direction in a three-dimensional space is the cell thickness direction. In this case, when a direction in which an electrode tab extends out is the same as the direction in which the electrode terminal extends out, the second direction is the cell width direction, and the first direction is the cell length direction.

The definition of the above directions will be illustrated in the following detailed description of implementations through specific examples with reference to the accompanying drawings.

As shown in FIG. 1 and FIG. 4, in the up-down direction (first direction), an upper side of the separator 10 is the first separator side 101, an upper side of the insulating adhesive tape 20 is the first adhesive-tape side 201, and an upper side of the positive electrode plate 30 is the first positive-electrode-plate side 301; correspondingly, a lower side of the separator 10 is the second separator side 102, a lower side of the insulating adhesive tape 20 is the second adhesive-tape side 202, and a lower side of the positive electrode plate 30 is the second positive-electrode-plate side 302; The first positive-electrode-plate side 301 is higher than the second adhesive-tape side 202, the first positive-electrode-plate side 301 is lower than the first adhesive-tape side 201, the second adhesive-tape side 202 is higher than the second positive-electrode-plate side 302, and the second adhesive-tape side 202 is lower than the first positive-electrode-plate side 301.

In the battery provided by the present disclosure, the first positive-electrode-plate side 301 is a die-cut side, that is, after a wide positive electrode plate 30 is die-cut, the positive electrode tab 40 and the first positive-electrode-plate side 301 are formed. After die-cutting, burrs may be formed at the edges of the first positive-electrode-plate side 301 and the positive electrode tab 40 due to the die-cutting. If the first positive-electrode-plate side 301 and the positive electrode tab 40 are directly combined with the separator 10 and the negative electrode plate to form a battery core, the burrs may pierce the separator 10, resulting in a short circuit between the positive electrode plate 30 and the negative electrode plate. Therefore, in the present disclosure, the insulating adhesive tape 20 covers the first positive-electrode-plate side 301 and the positive electrode tab 40 and isolates the first positive-electrode-plate side 301 and the positive electrode tab 40 from the negative electrode plate, thereby preventing burrs from piercing the separator 10 and improving the battery safety.

The separator 10 includes a first separator side 101 and a second separator side 102 disposed opposite to each other in the first direction. With reference to specific examples, as shown in FIG. 1 and FIG. 5, the first separator side 101 is a side of the separator 10 close to a position where an electrode tab extends out (where in the present disclosure, the insulating adhesive tape 20 is disposed mainly to solve the problem that burrs formed by die-cutting of the positive electrode plate 30 pierce the separator 10; the negative electrode plate is generally designed to be wider than the positive electrode plate 30, the die-cutting position is higher, and even if burrs on the negative electrode plate pierce the separator 10, usually the positive and negative electrodes are not short circuited, so the safety performance is not affected. Therefore, the first separator side 101 is a side of the separator 10 close to the position where the positive electrode tab 40 extends out), and the second separator side 102 is a side of the separator 10 away from the position where the electrode tab extends out. In addition, the separator 10 includes a first separator end 103 and a second separator end 104 disposed opposite to each other in the second direction. For example, in a wound battery core, if an innermost end of the separator 10 is defined as the first separator end 103, an outermost end of the separator 10 is defined as the second separator end 104, and vice versa (where the innermost end and the outermost end are defined based on inner and outer loops of the winding. For example, in the process of forming the battery cell by winding from the inside to the outside, the starting position is the innermost loop, which is the innermost end of the separator 10, i.e., the first separator end 103; after the winding is completed, the end position is the outermost loop, which is the outermost end of the separator 10, i.e., the second separator end 104).

For a laminated battery, it is formed by stacking of a plurality of positive electrode plates 30, a plurality of negative electrode plates, and a plurality of battery separators 10. In this case, a direction in which the electrode tab extends out is the first direction, and the separator 10 includes a first separator side 101 and a second separator side 102 in the first direction, where the first separator side 101 is a side close to the position where the electrode tab extends out; a direction perpendicular to the direction in which the electrode tab extends out on a large surface of the separator 10 is the second direction. The separator 10 includes a first separator end 103 and a second separator end 104 in the second direction (where the cell width direction is the second direction, and two ends in the cell width direction are the first separator end 103 and the second separator end 104).

In the present disclosure, as shown in FIG. 3 and FIG. 4, the left-right direction is the second direction, and the up-down direction is the first direction. The first positive-electrode-plate side 301 is provided at an upper side of the positive electrode plate 30, and the second positive-electrode-plate side 302 is provided at a lower side of the positive electrode plate 30. A left end of the positive electrode plate 30 is the first positive-electrode-plate end 305, and a right end of the positive electrode plate 30 is the second positive-electrode-plate end 306. In addition, the first adhesive-tape side 201 is provided at an upper side of the insulating adhesive tape 20, and the second adhesive-tape side 202 is provided at a lower side of the insulating adhesive tape 20. A left end of the insulating adhesive tape 20 is the first adhesive-tape end 203, and a right end of the insulating adhesive tape 20 is the second adhesive-tape end 204.

The size or scale of each figure in all the accompanying drawings of the present disclosure does not constitute a limitation on the technical solutions provided by the present disclosure. As shown in FIG. 5, a proportional relationship between a length between the first adhesive-tape end 203 and the second adhesive-tape end 204 and the positive electrode plate 30 or the separator 10 does not represent an actual proportional relationship. All the accompanying drawings of the present disclosure merely show the positional relationship between the components, and do not represent the specific size or proportional relationship. As shown in FIG. 5, the first separator side 101 is further up than the first adhesive-tape side 201, which can be shown and expressed in the figure; but the length by which the first separator side 101 is further up than the first adhesive-tape side 201 in the upward direction and the proportional relationship between them cannot be shown or expressed in FIG. 5. As shown in FIG. 5, the first adhesive-tape side 201 is provided between the first separator side 101 and the second separator side 102 (not shown in FIG. 5, where the second separator side 102 is shown in FIG. 1, and is a lowermost side of the separator 10 in the up-down direction), the first coating side 3031 is provided between the first adhesive-tape side 201 and the second adhesive-tape side 202, and the second adhesive-tape side 202 is provided between the first coating side 3031 and the second coating side 3032. Such positional relationships can be expressed in the accompanying drawings of the present disclosure, but the specific size or proportional relationship is not limited in the accompanying drawings of the present disclosure.

In order to prevent the separator 10 from being deformed or shrinking due to other factors to cause a short circuit between the positive electrode plate 30 and the negative electrode plate, the separator 10 is generally designed to be wider than the positive electrode plate 30. The first separator side 101 at least needs to be disposed protruding from the first positive-electrode-plate side 301 in the first direction. As shown in FIG. 5, the first separator side 101 is higher than the first positive-electrode-plate side 301. In the up-down direction, the first separator side 101 is disposed higher than the first positive-electrode-plate side 301.

To ensure the overall performance of the battery, a distance between the first separator side 101 and the first positive-electrode-plate side 301 may be 1 mm to 2 mm. A die-cut positive electrode edge is arranged on the insulating adhesive tape 20, and a puncture strength of the insulating adhesive tape 20 is 2 to 3 times that of the separator 10, which can reduce the risk of burrs piercing the separator 10, and at the same time prevent the adhesive tape from contacting the dressing to affect the battery capacity.

In an embodiment of the present disclosure, a thickness of the insulating adhesive tape is 20 µm to 30 µm, which ensures the hardness of the adhesive tape, avoids the wrinkles of the adhesive tape when pasting, and improves the processing ability.

In an embodiment of the present disclosure, as shown in FIG. 3, FIG. 4, and FIG. 5, a position on the positive electrode plate 30 close to the first positive-electrode-plate side 301 is coated with a ceramic coating 303, the ceramic coating 303 includes a first coating side 3031 and a second coating side 3032, the first coating side 3031 is provided between the first adhesive-tape side 201 and the second adhesive-tape side 202, and the second adhesive-tape side 202 is provided between the first coating side 3031 and the second coating side 3032. After the ceramic coating is die-cut, burrs of 80 µm to 120 µm may be formed, which are very sharp. The insulating adhesive tape 20 is attached to at least one surface of the separator 10, which can effectively reduce the safety risk of damage to the separator caused by the burrs.

In an implementation, a spacing between the second coating side 3032 and the second adhesive-tape side 202 is 1 mm to 2 mm, and the die-cut positive electrode edge is in contact with the adhesive tape, which can reduce the risk of burrs piercing the separator 10 to cause a short circuit, while preventing the adhesive tape from contacting the dressing to affect the battery capacity.

In some embodiments, the positive electrode plate 30 is coated with a positive electrode dressing layer 304, a side of the positive electrode dressing layer 304 close to the first positive-electrode-plate side 301 does not protrude from the second adhesive-tape side 202 in the first direction, and a distance between the side of the positive electrode dressing layer 304 close to the first positive-electrode-plate side 301 and the second adhesive-tape side 202 is 0 mm to 1 mm, thereby preventing the adhesive tape from contacting the dressing layer 30 to affect the battery capacity.

In the present disclosure, the positive electrode tab 40 is obtained by die-cutting the positive electrode plate 30. In addition, in the preparation process, a positive electrode plate 30 of a larger width is selected, which is die-cut to form the positive electrode tab 40, and the side where the positive electrode tab 40 is formed is the first positive-electrode-plate side 301.

In an embodiment of the present disclosure, the positive electrode plate 30, the negative electrode plate, and the separator 10 are each an integral and continuous sheet, and a core of the cell is formed by stacking the positive electrode plate 30, the negative electrode plate, and the separator and winding the stack.

As shown in FIG. 6, a wound pole core is formed by stacking the positive electrode plate 30, the negative electrode plate, and the separator 10 and winding the stack. In the preparation process, the positive electrode plate 30, the negative electrode plate, and the separator 10 are first stretched, unwound and corrected for deviation, and then the positive electrode plate 30, the negative electrode plate, and the separator 10 are pressed together and wound to form a battery core. In conventional solutions, the above operation steps are performed first; and finally, an adhesive tape is attached to the positive electrode tab 40 to complete the isolation, or a ceramic coating 303 is directly coated at the edge of the positive electrode plate 30. As mentioned above, both the two methods have their drawbacks. Therefore, in the present disclosure, during the stretching and unwinding process, an independent stretching and unwinding structure for the insulating adhesive tape 20 is placed, and the positive electrode plate 30, the negative electrode plate, the separator 10, and the insulating adhesive tape 20 are stretched and unwound respectively, and then wound to form a pole core. During this process, the insulating adhesive tape 20 is pressed and attached to the positive electrode plate 30.

In the wound cell, the design of the continuous separator 10, positive electrode plate 30, negative electrode plate, and insulating adhesive tape 20 can save the step of pasting an adhesive tape to the positive electrode tabs 40 one by one after being wound into a pole core, thereby reducing the number of process steps and reducing the difficulty and cost of processing.

In an embodiment, as shown in FIG. 7, the separator 10 is an integral and continuous sheet, the cell includes the plurality of positive electrode plates 30 and the plurality of negative electrode plates, the core of the cell is formed by folding the separator 10 multiple times and inserting one positive electrode plate 30 or one negative electrode plate between every two neighboring layers of the separator 10, and the positive electrode plates 30 and the negative electrode plates are alternately arranged.

In another embodiment, the separator 10 is an integral and continuous sheet, there are a plurality of positive electrode plates 30 and a plurality of negative electrode plates, the core of the cell is formed by winding the separator 10 and inserting one positive electrode plate 30 or one negative electrode plate between every two neighboring layers of the separator 10, and the positive electrode plates 30 and the negative electrode plates are alternately arranged.

In the above two embodiments, the separator 10 is an integral and continuous sheet, and the insulating adhesive tape 20 can be directly attached to the positive electrode plate 30, without the need to paste the adhesive tape on the positive electrode tabs 40 in the formed battery core one by one, thereby reducing the number of process steps and reducing the difficulty and cost of processing.

The above three embodiments are respectively a wound battery core and a laminated battery core. The laminated battery core is not a fully-laminated battery core, but instead, there are a plurality of positive electrode plates 30 and a plurality of negative electrode plates, the separator 10 is an integral and continuous sheet, the separator 10 is continuously folded or wound, so that each of the plurality of positive electrode plates 30 or negative electrode plates is sandwiched between two neighboring layers of the separator 10 to form a battery core, so as to make up a battery.

Certainly, in some embodiments, the above structure is also applicable to a fully-laminated battery core, and the number of process steps and cost can also be reduced to a certain extent. In addition, the safety can be stably ensured and the separator can be protected from being pierced by burrs.

The first separator side 101 and the second separator side 102 are disposed opposite to each other in the first direction, and the first separator side 101 and the second separator side 102 both extend in the second direction. As shown in FIG. 1, the first separator side 101 and the second separator side 102 are disposed opposite to each other in the up-down direction, and the first separator side 101 and the second separator side 102 both extend in the left-right direction. The first separator end 103 and the second separator end 104 are disposed opposite to each other in the second direction, and the first separator end 103 and the second separator end 104 both extend in the first direction. As shown in FIG. 1, the first separator end 103 and the second separator end 104 are disposed opposite to each other in the left-right direction, and the first separator end 103 and the second separator end 104 both extend in the up-down direction.

Generally (for products currently available on the market and their preparation conditions), the separator 10 is selected as a rectangular sheet, and the first separator side 101, the second separator side 102, the first separator end 103, and the second separator end 104 are four sides of the rectangular sheet-like separator 10, as shown in FIG. 1.

As shown in FIG. 8, the present disclosure provides a battery (cell).

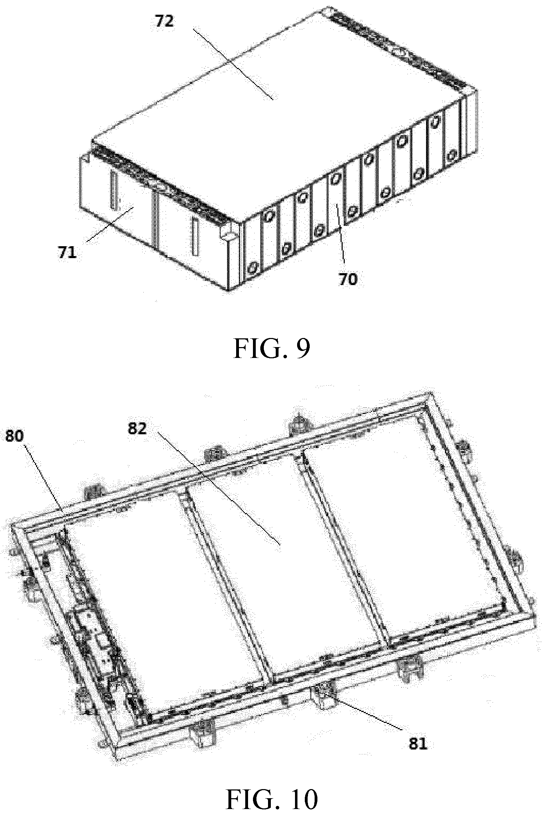

The present disclosure also provides a battery module, including a plurality of batteries provided by the present disclosure, where the plurality of batteries are connected in series and/or in parallel. In some embodiments, as shown in FIG. 9, the battery module includes a plurality of cells 70, where the plurality of cells 70 are arranged between two end plates 71, and an upper side of the battery module is covered and fixed by a top cover 72.

The present disclosure also provides a battery pack, including the above-mentioned battery or at least one battery module provided by the present disclosure. In some embodiments, as shown in FIG. 10, the battery pack includes a tray 80 and a plurality of battery modules 82 disposed on the tray 80. In order to facilitate the fixing, lifting lugs 81 configured to facilitate the installation of the tray on a vehicle body are disposed around the tray 80.

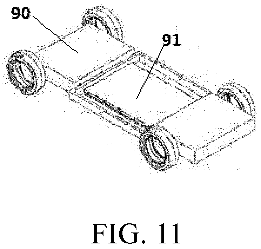

In an embodiment of the present disclosure, a vehicle is provided, including a plurality of batteries provided by the present disclosure, a battery module provided by the present disclosure, or a battery pack provided by the present disclosure. In some embodiments, as shown in FIG. 11, the vehicle includes a chassis 90 and a battery pack 91 disposed on the chassis.

Based on the above, it can be seen that the present disclosure has the above-mentioned excellent characteristics, and therefore can be used to offer enhanced performance that is unprecedented in the prior art, to achieve high practicability and become a product with great practical value.

The above descriptions are merely exemplary embodiments of the present invention and are not intended to limit the present invention. Any modification, equivalent replacement and improvement made without departing from the principle of the present invention shall fall within the protection scope of the present invention as defined by the appended claims.

## Claims

1. A cell, comprising a positive electrode plate (30), a negative electrode plate (50), and a separator (10), wherein the separator is at least partially provided between the positive electrode plate and the negative electrode plate, and the positive electrode plate comprises a first positive-electrode-plate side (301) and a second positive-electrode-plate side (302) arranged opposite to each other in a first direction; a positive electrode tab (40) is provided on the first positive-electrode-plate side (301), and a negative electrode tab (60) is provided on the negative electrode plate (50); the first direction being a direction in which the positive electrode tab 40 extends out from the positive electrode plate 30 or the negative electrode tab 60 extends out from the negative electrode plate 50; an insulating adhesive tape (20) is attached to the positive electrode plate, the insulating adhesive tape comprises a first adhesive-tape side (201) and a second adhesive-tape side (202) arranged opposite to each other in the first direction, and the first adhesive-tape side (201) is provided on a same side as the first positive-electrode-plate side (301); the first positive-electrode-plate side (301) is arranged between the first adhesive-tape side (201) and the second adhesive-tape side (202) in the first direction, and the second adhesive-tape side (202) is arranged between the first positive-electrode-plate side (301) and the second positive-electrode-plate side (302) in the first direction; and the positive electrode plate (30) comprises a first positive-electrode-plate end (305) and a second positive-electrode-plate end (306) arranged opposite to each other in a second direction, and the insulating adhesive tape (20) is configured to extend from the first positive-electrode-plate end (305) to the second positive-electrode-plate end (306) in the second direction;
wherein the separator (10) comprises a first separator side (101) and a second separator side (102) arranged opposite to each other in the first direction, and the separator comprises a first separator end (103) and a second separator end (104) arranged opposite to each other in the second direction; and the first separator side (101) is provided on a same side as the first positive-electrode-plate side (301); and
wherein the first adhesive-tape side (201) is flush with the first separator side (101); and/or
wherein a spacing between the first adhesive-tape side (201) and the first separator side (101) is less than or equal to 1 mm.

2. The cell according to claim 1, wherein the first separator side (101) is provided protruding from the first positive-electrode-plate side (301) in the first direction.

3. The cell according to claim 2, wherein a distance between the first separator side and the first positive-electrode-plate side is 1 mm to 2 mm; and/or
wherein a distance between the first adhesive-tape side and the first positive-electrode-plate side is 1 mm to 2 mm; and/or
wherein a thickness of the insulating adhesive tape is 20 µm to 30 µm.

4. The cell according to any one of claims 1-3, wherein a position on the positive electrode plate (30) close to the first positive-electrode-plate side (301) is coated with a ceramic coating (303), the ceramic coating comprises a first coating side (3031) and a second coating side (3032), the first coating side is arranged between the first adhesive-tape side (201) and the second adhesive-tape side (202), and the second adhesive-tape side (202) is arranged between the first coating side (3031) and the second coating side (3032).

5. The cell according to claim 4, wherein a spacing between the second coating side and the second adhesive-tape side is 1 mm to 2 mm; and/or
wherein the positive electrode plate is coated with a positive electrode dressing layer (304), a side of the positive electrode dressing layer (304) close to the first positive-electrode-plate side (301) does not protrude from the second adhesive-tape side (202) in the first direction, and a distance between the side of the positive electrode dressing layer (304) close to the first positive-electrode-plate side (301) and the second adhesive-tape side (202) is 0 mm to 1 mm.

6. The cell according to any one of claims 1-5, wherein the positive electrode plate, the negative electrode plate, and the separator are each an integral and continuous sheet, and a core of the cell is formed by stacking and winding the positive electrode plate, the negative electrode plate, and the separator.

7. The cell according to any one of claims 1-6, wherein the separator is an integral and continuous sheet, there are a plurality of positive electrode plates and a plurality of negative electrode plates, the core of the cell is formed by folding the separator multiple times and inserting one positive electrode plate or one negative electrode plate between every two neighboring layers of the separator, and the positive electrode plates and the negative electrode plates are alternately arranged; and/or
wherein the separator is an integral and continuous sheet, the battery comprises the plurality of positive electrode plates and the plurality of negative electrode plates, the core of the cell is formed by winding the separator and inserting one positive electrode plate or one negative electrode plate between every two neighboring layers of the separator, and the positive electrode plates and the negative electrode plates are alternately arranged.

8. The cell according to any one of claims 1-7, wherein the insulating adhesive tape (20) comprises a first adhesive-tape end (203) and a second adhesive-tape end (204) disposed opposite to each other in the second direction, the first adhesive-tape end is flush with the first positive-electrode-plate end (305), and the second adhesive-tape end is flush with the second positive-electrode-plate end (306).

9. The cell according to any one of claims 1-8, wherein a width of the insulating adhesive tape (20) in the first direction is 4 mm to 6 mm; and/or
wherein a side of the insulating adhesive tape away from the positive electrode plate is adhered to the separator.

10. The cell according to any one of claims 1-9, wherein the insulating adhesive tape is adhered to at least one surface of the positive electrode plate in a thickness direction of the positive electrode plate; and/or
wherein the first separator side and the second separator side both extend in the second direction, and the first separator end and the second separator end both extend in the first direction; and/or wherein the insulating adhesive tape comprises the first adhesive-tape end and the second adhesive-tape end disposed opposite to each other in the second direction, the first adhesive-tape side and the second adhesive-tape side both extend in the second direction, and the first adhesive-tape end and the second adhesive-tape end both extend in the first direction.

11. The cell according to any one of claims **1-10,** wherein the second adhesive-tape side is disposed close to the second separator side; and/or
wherein the insulating adhesive tape comprises the first adhesive-tape end and the second adhesive-tape end disposed opposite to each other in the second direction, the first adhesive-tape end is disposed at a position corresponding to the first positive-electrode-plate end, and the second adhesive-tape end is disposed at a position corresponding to the second positive-electrode-plate end.

12. A battery module, comprising a plurality of cells according to any one of claims **1-11,** wherein the plurality of cells are connected in series and/or in parallel.

13. A vehicle, comprising a plurality of cells according to any one of claims **1-11,** or comprising the battery module according to claim 12.

## Patentansprüche

1. Zelle, umfassend eine positive Elektrodenplatte (30), eine negative Elektrodenplatte (50) und einen Separator (10), wobei der Separator zumindest teilweise zwischen der positiven Elektrodenplatte und der negativen Elektrodenplatte angeordnet ist und die positive Elektrodenplatte eine erste Seite (301) der positiven Elektrodenplatte und eine zweite Seite (302) der positiven Elektrodenplatte aufweist, die in einer ersten Richtung einander gegenüberliegend angeordnet sind; an der ersten positiven Elektrodenplattenseite (301) ist eine positive Elektrodenlasche (40) vorgesehen, und an der negativen Elektrodenplatte (50) ist eine negative Elektrodenlasche (60) vorgesehen; wobei die erste Richtung eine Richtung ist, in der sich die positive Elektrodenlasche (40) von der positiven Elektrodenplatte (30) oder die negative Elektrodenlasche (60) von der negativen Elektrodenplatte (50) erstreckt; ein isolierendes Klebeband (20) ist an der positiven Elektrodenplatte angebracht, wobei das isolierende Klebeband eine erste Klebebandseite (201) und eine zweite Klebebandseite (202) umfasst, die in der ersten Richtung einander gegenüberliegend angeordnet sind, und die erste Klebebandseite (201) auf derselben Seite wie die erste Seite der positiven Elektrodenplatte (301) vorgesehen ist; die erste Seite der positiven Elektrodenplatte (301) ist in der ersten Richtung zwischen der ersten Klebebandseite (201) und der zweiten Klebebandseite (202) angeordnet, und die zweite Klebebandseite (202) in der ersten Richtung zwischen der ersten Seite der positiven Elektrodenplatte (301) und der zweiten Seite der positiven Elektrodenplatte (302) angeordnet ist; und die positive Elektrodenplatte (30) umfasst ein erstes Ende der positiven Elektrodenplatte (305) und ein zweites Ende der positiven Elektrodenplatte (306), die in einer zweiten Richtung einander gegenüberliegend angeordnet sind, und das isolierende Klebeband (20) ist dazu konfiguriert, sich in der zweiten Richtung vom ersten positiven Elektrodenplattenende (305) zum zweiten positiven Elektrodenplattenende (306) zu erstrecken;
wobei der Separator (10) eine erste Separatorseite (101) und eine zweite Separatorseite (102) umfasst, die in der ersten Richtung einander gegenüberliegend angeordnet sind, und der Separator ein erstes Separatorende (103) und ein zweites Separatorende (104) umfasst, die in der zweiten Richtung einander gegenüberliegend angeordnet sind; und die erste Separatorseite (101) auf derselben Seite wie die erste Positive-Elektrodenplattenseite (301) vorgesehen ist; und
wobei die erste Klebebandseite (201) bündig mit der ersten Separatorseite (101) abschließt; und/oder
wobei ein Abstand zwischen der ersten Klebebandseite (201) und der ersten Separatorseite (101) kleiner oder gleich 1 mm ist.

2. Zelle gemäß Anspruch 1, wobei die erste Separatorseite (101) so ausgebildet ist, dass sie in der ersten Richtung aus der ersten positiven Elektrodenplattenseite (301) herausragt.

3. Zelle gemäß Anspruch 2, wobei ein Abstand zwischen der ersten Separatorseite und der ersten Seite der positiven Elektrodenplatte 1 mm bis 2 mm beträgt; und/oder
wobei der Abstand zwischen der ersten Klebebandseite und der ersten Seite der positiven Elektrodenplatte 1 mm bis 2 mm beträgt; und/oder
wobei die Dicke des isolierenden Klebebands 20 µm bis 30 µm beträgt.

4. Zelle gemäß einem der Ansprüche 1 bis 3, wobei eine Stelle auf der positiven Elektrodenplatte (30) nahe der ersten Seite der positiven Elektrodenplatte (301) mit einer Keramikbeschichtung (303) beschichtet ist, wobei die Keramikbeschichtung eine erste Beschichtungsseite (3031) und eine zweite Beschichtungsseite (3032) umfasst, die erste Beschichtungsseite zwischen der ersten Klebebandseite (201) und der zweiten Klebebandseite (202) angeordnet ist und die zweite Klebebandseite (202) zwischen der ersten Beschichtungsseite (3031) und der zweiten Beschichtungsseite (3032) angeordnet ist.

5. Zelle gemäß Anspruch 4, wobei ein Abstand zwischen der zweiten Beschichtungsseite und der zweiten Klebebandseite 1 mm bis 2 mm beträgt; und/oder
wobei die positive Elektrodenplatte mit einer positiven Elektrodenbeschichtungsschicht (304) beschichtet ist, eine der ersten positiven Elektrodenplattenseite (301) nahegelegene Seite der positiven Elektrodenbeschichtungsschicht (304) nicht über die zweite Klebebandseite (202) in der ersten Richtung hervorsteht und ein Abstand zwischen der der ersten Seite der positiven Elektrodenplatte (301) benachbarten Seite der positiven Elektrodenbeschichtungsschicht (304) und der zweiten Klebebandseite (202) 0 mm bis 1 mm beträgt.

6. Zelle gemäß einem der Ansprüche 1 bis 5, wobei die positive Elektrodenplatte, die negative Elektrodenplatte und der Separator jeweils eine einstückige und durchgehende Folie sind und ein Kern der Zelle durch Stapeln und Wickeln der positiven Elektrodenplatte, der negativen Elektrodenplatte und des Separators gebildet wird.

7. Zelle gemäß einem der Ansprüche 1 bis 6, wobei der Separator eine einstückige und durchgehende Folie ist, eine Vielzahl von positiven Elektrodenplatten und eine Vielzahl von negativen Elektrodenplatten vorhanden sind, der Kern der Zelle durch mehrmaliges Falten des Separators und Einfügen einer positiven Elektrodenplatte oder einer negativen Elektrodenplatte zwischen jeweils zwei benachbarte Schichten des Separators gebildet wird und die positiven Elektrodenplatten und die negativen Elektrodenplatten abwechselnd angeordnet sind; und/oder wobei der Separator eine einstückige und durchgehende Folie ist, die Batterie die mehreren positiven Elektrodenplatten und die mehreren negativen Elektrodenplatten umfasst, der Kern der Zelle durch Aufwickeln des Separators und Einfügen einer positiven Elektrodenplatte oder einer negativen Elektrodenplatte zwischen jeweils zwei benachbarte Schichten des Separators gebildet wird und die positiven Elektrodenplatten und die negativen Elektrodenplatten abwechselnd angeordnet sind.

8. Zelle gemäß einem der Ansprüche 1 bis 7, wobei das isolierende Klebeband (20) ein erstes Klebebandende (203) und ein zweites Klebebandende (204) umfasst, die in der zweiten Richtung einander gegenüberliegend angeordnet sind, wobei das erste Klebebandende bündig mit dem ersten Ende der positiven Elektrodenplatte (305) abschließt und das zweite Klebebandende bündig mit dem zweiten Ende der positiven Elektrodenplatte (306) abschließt.

9. Zelle gemäß einem der Ansprüche 1 bis 8, wobei die Breite des isolierenden Klebebands (20) in der ersten Richtung 4 mm bis 6 mm beträgt; und/oder
wobei eine von der positiven Elektrodenplatte abgewandte Seite des isolierenden Klebebands an dem Separator haftet.

10. Zelle gemäß einem der Ansprüche 1 bis 9, wobei das isolierende Klebeband in einer Dickenrichtung der positiven Elektrodenplatte an mindestens einer Oberfläche der positiven Elektrodenplatte befestigt ist; und/oder
wobei sich sowohl die erste Separatorseite als auch die zweite Separatorseite in der zweiten Richtung erstrecken und sowohl das erste Separatorende als auch das zweite Separatorende sich in der ersten Richtung erstrecken; und/oder
wobei das isolierende Klebeband das erste Klebebandende und das zweite Klebebandende umfasst, die in der zweiten Richtung einander gegenüberliegend angeordnet sind, wobei sich die erste Klebebandseite und die zweite Klebebandseite beide in der zweiten Richtung erstrecken und sich das erste Klebebandende und das zweite Klebebandende beide in der ersten Richtung erstrecken.

11. Zelle gemäß einem der Ansprüche 1 bis 10, wobei die zweite Klebebandseite nahe an der zweiten Separatorseite angeordnet ist; und/oder
wobei das isolierende Klebeband das erste Klebebandende und das zweite Klebebandende umfasst, die in der zweiten Richtung einander gegenüberliegend angeordnet sind, wobei das erste Klebebandende an einer Position angeordnet ist, die dem ersten Ende der positiven Elektrodenplatte entspricht, und das zweite Klebebandende an einer Position angeordnet ist, die dem zweiten Ende der positiven Elektrodenplatte entspricht.

12. Batteriemodul, umfassend eine Vielzahl von Zellen gemäß einem der Ansprüche 1 bis 11, wobei die Vielzahl von Zellen in Reihe und/oder parallel geschaltet ist.

13. Fahrzeug, das eine Vielzahl von Zellen gemäß einem der Ansprüche 1 bis 11 umfasst oder das das Batteriemodul gemäß Anspruch 12 umfasst.

## Revendications

1. Cellule comprenant une plaque d'électrode positive (30), une plaque d'électrode négative (50) et un séparateur (10), dans lequel le séparateur est disposé au moins partiellement entre la plaque d'électrode positive et la plaque d'électrode négative, et la plaque d'électrode positive comprend un premier côté de plaque d'électrode positive (301) et un deuxième côté de plaque d'électrode positive (302) disposés en vis-à-vis l'un de l'autre dans une première direction ; une languette d'électrode positive (40) est prévue sur le premier côté de la plaque d'électrode positive (301), et une languette d'électrode négative (60) est prévue sur la plaque d'électrode négative (50); la première direction étant une direction dans laquelle la languette d'électrode positive (40) s'étend à partir de la plaque d'électrode positive (30) ou la languette d'électrode négative (60) s'étend à partir de la plaque d'électrode négative (50); un ruban adhésif isolant (20) est fixé à la plaque d'électrode positive; ce ruban adhésif isolant comprend une première face de ruban adhésif (201) et une deuxième face de ruban adhésif (202) disposées en vis-à-vis l'une de l'autre dans la première direction, et la première face de ruban adhésif (201) est prévue sur le même côté que la première face de la plaque d'électrode positive (301) ; le premier côté de la plaque d'électrode positive (301) est disposé entre le premier côté du ruban adhésif (201) et le deuxième côté du ruban adhésif (202) dans la première direction, et le deuxième côté du ruban adhésif (202) est disposé entre le premier côté de la plaque d'électrode positive (301) et le deuxième côté de la plaque d'électrode positive (302) dans la première direction ; et la plaque d'électrode positive (30) comprend une première extrémité de plaque d'électrode positive (305) et une deuxième extrémité de plaque d'électrode positive (306) disposées en vis-à-vis l'une de l'autre dans une deuxième direction, et le ruban adhésif isolant (20) est configuré pour s'étendre de la première extrémité de la plaque d'électrode positive (305) à la deuxième extrémité de la plaque d'électrode positive (306) dans la deuxième direction;
dans lequel le séparateur (10) comprend un premier côté de séparateur (101) et un deuxième côté de séparateur (102) disposés à l'opposé l'un de l'autre dans la première direction, et le séparateur comprend une première extrémité de séparateur (103) et une deuxième extrémité de séparateur (104) disposées à l'opposé l'une de l'autre dans la deuxième direction; et le premier côté du séparateur (101) est prévu du même côté que le premier côté de la plaque d'électrode positive (301); et
dans lequel le premier côté de ruban adhésif (201) affleure le premier côté de séparateur (101); et/ou
dans lequel l'écart entre la première face du ruban adhésif (201) et la première face du séparateur (101) est inférieur ou égal à 1 mm.

2. Cellule selon la revendication 1, dans laquelle la première face du séparateur (101) fait saillie à partir de la première face de la plaque d'électrode positive (301) dans la première direction.

3. Cellule selon la revendication 2, dans laquelle la distance entre la première face du séparateur et la première face de la plaque d'électrode positive est comprise entre 1 mm et 2 mm; et/ou
dans lequel la distance entre le premier côté du ruban adhésif et le premier côté de la plaque d'électrode positive est comprise entre 1 mm et 2 mm; et/ou
dans lequel l'épaisseur du ruban adhésif isolant est comprise entre 20 µm et 30 µm.

4. Cellule selon l'une quelconque des revendications 1 à 3, dans lequel une position sur la plaque d'électrode positive (30) proche du premier côté de la plaque d'électrode positive (301) est recouverte d'un revêtement céramique (303), le revêtement céramique comprenant un premier côté de revêtement (3031) et un deuxième côté de revêtement (3032), le premier côté de revêtement est disposé entre le premier côté du ruban adhésif (201) et le deuxième côté du ruban adhésif (202), et le deuxième côté du ruban adhésif (202) est disposé entre le premier côté de revêtement (3031) et le deuxième côté de revêtement (3032).

5. Cellule selon la revendication 4, dans laquelle l'espacement entre la deuxième face de revêtement et la deuxième face de ruban adhésif est compris entre 1 mm et 2 mm; et/ou
dans lequel la plaque d'électrode positive est recouverte d'une couche de revêtement d'électrode positive (304), un côté de la couche de revêtement d'électrode positive (304) proche de la première face de la plaque d'électrode positive (301) ne dépasse pas de la deuxième face de ruban adhésif (202) dans la première direction, et la distance entre le côté de la couche de revêtement d'électrode positive (304) proche du premier côté de la plaque d'électrode positive (301) et le deuxième côté du ruban adhésif (202) est comprise entre 0 mm et 1 mm.

6. Cellule selon l'une quelconque des revendications 1 à 5, dans lequel la plaque d'électrode positive, la plaque d'électrode négative et le séparateur constituent chacun une feuille monobloc et continue, et le noyau de la cellule est formé par empilement et enroulement de la plaque d'électrode positive, de la plaque d'électrode négative et du séparateur.

7. Cellule selon l'une quelconque des revendications 1 à 6, dans lequel le séparateur est une feuille d'un seul tenant et continue, il existe une pluralité de plaques d'électrode positive et une pluralité de plaques d'électrode négative, le noyau de la cellule est formé en pliant le séparateur plusieurs fois et en insérant une plaque d'électrode positive ou une plaque d'électrode négative entre chaque paire de couches adjacentes du séparateur, et les plaques d'électrode positive et les plaques d'électrode négative sont disposées en alternance; et/ou
dans lequel le séparateur est une feuille monobloc et continue, la batterie comprend la pluralité de plaques d'électrode positive et la pluralité de plaques d'électrode négative, le noyau de la cellule est formé en enroulant le séparateur et en insérant une plaque d'électrode positive ou une plaque d'électrode négative entre chaque paire de couches adjacentes du séparateur, et les plaques d'électrode positive et les plaques d'électrode négative sont disposées en alternance.

8. Cellule selon l'une quelconque des revendications 1 à 7, dans laquelle le ruban adhésif isolant (20) comprend une première extrémité de ruban adhésif (203) et une deuxième extrémité de ruban adhésif (204) disposées à l'opposé l'une de l'autre dans la deuxième direction, la première extrémité de ruban adhésif affleure la première extrémité de la plaque d'électrode positive (305), et la deuxième extrémité de ruban adhésif affleure la deuxième extrémité de la plaque d'électrode positive (306).

9. Cellule selon l'une quelconque des revendications 1 à 8, dans lequel la largeur du ruban adhésif isolant (20) dans la première direction est comprise entre 4 mm et 6 mm; et/ou
dans lequel un côté du ruban adhésif isolant opposé à la plaque d'électrode positive est collé au séparateur.

10. Cellule selon l'une quelconque des revendications 1 à 9, dans laquelle le ruban adhésif isolant est collé sur au moins une surface de la plaque d'électrode positive dans le sens de l'épaisseur de cette dernière; et/ou
dans laquelle le premier côté du séparateur et le deuxième côté du séparateur s'étendent tous deux dans la deuxième direction, et la première extrémité du séparateur et la deuxième extrémité du séparateur s'étendent toutes deux dans la première direction; et/ou
dans lequel le ruban adhésif isolant comprend une première extrémité de ruban adhésif et une deuxième extrémité de ruban adhésif disposées à l'opposé l'une de l'autre dans la deuxième direction, le premier côté du ruban adhésif et le deuxième côté du ruban adhésif s'étendent tous deux dans la deuxième direction, et la première extrémité du ruban adhésif et la deuxième extrémité du ruban adhésif s'étendent toutes deux dans la première direction.

11. Cellule selon l'une quelconque des revendications 1 à 10, dans laquelle le deuxième côté du ruban adhésif est disposé à proximité du deuxième côté du séparateur; et/ou
dans lequel le ruban adhésif isolant comprend la première extrémité du ruban adhésif et la deuxième extrémité du ruban adhésif disposées à l'opposé l'une de l'autre dans la deuxième direction, la première extrémité du ruban adhésif est disposée à une position correspondant à la première extrémité de la plaque d'électrode positive, et la deuxième extrémité du ruban adhésif est disposée à une position correspondant à la deuxième extrémité de la plaque d'électrode positive.

12. Module de batterie, comprenant une pluralité de cellules selon l'une quelconque des revendications 1 à 11, dans lequel la pluralité de cellules est connectée en série et/ou en parallèle.

13. Véhicule comprenant une pluralité de cellules selon l'une quelconque des revendications 1 à 11, ou comprenant le module de batterie selon la revendication 12.
